(19) **Europäisches Patentamt / European Patent Office / Office européen des brevets**

(11) **EP 3 019 550 B1**

(12) **FASCICULE DE BREVET EUROPEEN**

(45) Date de publication et mention
de la délivrance du brevet:
**07.03.2018 Bulletin 2018/10**

(21) Numéro de dépôt: **14750559.8**

(22) Date de dépôt: **07.07.2014**

(51) Int Cl.:
*C08J 3/28* (2006.01)   *C08J 5/24* (2006.01)
*C08J 3/24* (2006.01)   *B29C 35/08* (2006.01)

(86) Numéro de dépôt international:
**PCT/FR2014/051742**

(87) Numéro de publication internationale:
**WO 2015/004376 (15.01.2015 Gazette 2015/02)**

(54) **PROCEDE DE FABRICATION D'UNE PIECE COMPOSITE**

VERFAHREN ZUR HERSTELLUNG EINES VERBUNDSTOFFTEILS

METHOD FOR PRODUCING A COMPOSITE PART

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.07.2013 FR 1356701**

(43) Date de publication de la demande:
**18.05.2016 Bulletin 2016/20**

(73) Titulaire: **A ET A - Mader
59000 Lille (FR)**

(72) Inventeurs:
• **MOLINA-NOLIN, Antonio
F-59320 Escobecques (FR)**
• **CRIQUI, Adrien
F-68190 UNGERSHEIM (FR)**

(74) Mandataire: **Balesta, Pierre
Cabinet Beau de Loménie
Immeuble Eurocentre
179 Boulevard de Turin
59777 Lille (FR)**

(56) Documents cités:
**GB-A- 2 475 427    US-B1- 6 207 726**

• **"Blade repair system", REINFORCED PLASTICS,
ELSEVIER ADVANCED TECHNOLOGY, NEW
YORK, NY, US, vol. 54, no. 6, 1 novembre 2010
(2010-11-01), page 16, XP027562980, ISSN:
0034-3617 [extrait le 2010-11-01]**
• **DATABASE WPI Week 200869 Thomson
Scientific, London, GB; AN 2008-L80004
XP002717874, -& JP 2008 195745 A (SHIMIZU
CONSTR CO LTD) 28 août 2008 (2008-08-28)**

**Description**

Arrière-plan de l'invention

La présente invention concerne le domaine technique des procédés de fabrication d'une pièce composite stratifiée, par photopolymérisation d'un renfort imprégné d'une composition photopolymérisable

On connait de nombreux procédés de fabrication de pièces composites qui peuvent être classés en fonction du nombre de pièces composites à fabriquer annuellement : les procédés concernant les petites séries, c'est-à-dire un nombre de pièces inférieur à 1000 par an, les procédés concernant des séries moyennes, c'est-à-dire de 1000 à 15000 pièces par an et enfin les procédés concernant les grandes séries à savoir un nombre de pièces supérieur à 15000 par an.

Pour les procédés de fabrication de petites séries de pièces composites, généralement les procédés de fabrication sont manuels et mettent en oeuvre soit le moulage au contact, la projection simultanée à l'aide d'un pistolet de fibres et de matrice, le drapage de renforts pré-imprégnés ou encore l'infusion de résine à travers un renfort disposé dans un moule par aspiration de ladite résine.

Pour les procédés de fabrication de moyennes séries de pièces composites, les procédés employés peuvent être par exemple le moulage sous vide, le moulage par injection en basse pression d'une résine liquide, le moulage par compression basse pression ou encore le moulage en autoclave.

Les procédés de fabrication de grandes séries de pièces composites mettent en oeuvre des méthodes telles que la compression à chaud de résines liquides, la compression à chaud de mat pré-imprégnées (SMC) ou de premixes (BMC), l'injection de premixes ou encore le moulage par injection réaction.

Il existe un besoin pour un procédé de fabrication de pièces composites en grandes séries permettant de s'affranchir des inconvénients des procédés décrits ci-dessus et notamment permettant une polymérisation de la résine à température ambiante sans apport de chaleur, notamment sans chauffage du moule, et sans changement de pression, c'est-à-dire sans mise sous vide ou de surpression appliquée au moule.

En outre, les procédés de l'état de l'art décrits ci-dessus nécessitent l'emploi d'un moule et d'un contre-moule impliquant un investissement important pour chaque configuration déterminée d'une pièce composite.

Les procédés de l'état de l'art ne permettent pas une polymérisation rapide de la résine, ni leurs automatisation afin d'atteindre des cadences de production importante. Pour ces différentes raisons, l'utilisation de pièces composites est généralement réservée à des domaines techniques dans lesquels les cadences de production ne sont pas un frein, par exemple la fabrication de pales d'éoliennes, ou encore de pièces spécifiques pour l'aéronautique. Leur emploi est encore très limité par exemple dans le domaine automobile.

On connait le document US 2010/0272574 A1 proposant une méthode de fabrication d'une pièce composite consistant à superposer plusieurs renforts imprégnés d'une composition polymérisable comprenant une résine ayant un premier groupe fonctionnel et un second groupe fonctionnel.

Ainsi, une première couche de renfort imprégnée est soumise à une première source de cuisson par exemple un rayonnement ultraviolet pour l'activation d'un premier groupe fonctionnel puis une seconde couche est superposée à la première couche et soumise elle-même à une seconde source de cuisson en vue d'activer le second groupe fonctionnel qu'elle contient et le second groupe fonctionnel de la première couche permettant ainsi l'adhérence entre la première couche et la seconde couche et la polymérisation partielle de la seconde couche.

La seconde source de cuisson peut être une source de rayonnement ultraviolets ou encore micro-ondes ou infrarouges.

La composition polymérisable met en oeuvre deux chimies différentes permettant de créer un réseau de couches interpénétrées (également désigné dans l'état de l'art par IPN pour « inter penetrated network »).

La matrice ainsi obtenue n'est pas homogène puisqu'elle résulte de deux types de polymérisations différentes. En outre, il existe un risque important de déphasage dans la matrice pouvant altérer les propriétés de la pièce composite résultante. Les compositions polymérisables utilisées dans ces systèmes dual cure ont également des problèmes de stabilité lorsque les résines supportant les différents groupes fonctionnels sont mélangées.

En outre, l'emploi de deux sources de rayonnement de nature différente, par exemple par infrarouges et ultraviolets, ne permet pas de bien contrôler la cinétique de réaction. En effet, l'échauffement généré pour amorcer une première réaction de polymérisation peut amorcer une seconde réaction de polymérisation qui est induite par apport de chaleur, ce qui est le cas lors de l'emploi des rayons infra-rouges.

Ce procédé n'est donc pas parfaitement reproductible, et ne permet pas d'obtenir des pièces composites ayant des propriétés mécaniques satisfaisantes.

On connait également US 6.207.726 B1 décrivant une composition photopolymérisable destinée à imprégner un renfort et comprenant au moins deux photo-amorceurs, le premier photo-amorceur absorbant dans le domaine des longueurs d'ondes supérieures à 500 nm et le second photo-amorceur absorbant dans le domaine des longueurs d'ondes inférieures à 500 nm.

La composition polymérisable met en oeuvre en particulier un colorant cationique ayant une absorption dans les longueurs d'ondes supérieures à 500 nm. Dans la plupart des exemples de réalisation, un premier rayonnement en vue d'absorber le premier photo-amorceur est effectué. Ce premier rayonnement est polychromatique puisqu'il couvre un spectre très large allant de 500 nm à 1200 nm, puis les renforts pré-imprégnés et pré-polymérisés sont superposés et soumis à une seconde source de rayonnement en vue d'absorber le second photo-amorceur. La seconde source de rayonnement est également polychromatique puisqu'il peut s'agir de la lumière du soleil impliquant ainsi des temps de polymérisation allant de 7 minutes à 40 minutes. Lorsqu'une source de rayonnement artificielle (lampe reproduisant la lumière du soleil) est utilisée, celle-ci couvre un spectre extrêmement large puisqu'allant de 390 nm à 1200 nm. Ce procédé a pour inconvénient que les temps de polymérisation sont très longs afin d'obtenir une polymérisation dans toute l'épaisseur de la pièce composite lorsque celle-ci est par exemple formée de trois plis.

En outre, les sources de rayonnement couvrent des spectres extrêmement larges impliquant des limitations dans les résines et les photo-amorceurs qui peuvent être utilisés. De plus, la plupart des exemples sont donnés avec des photoamorceurs très particuliers pouvant être amorcés avec une lumière infra-rouge. Ces photoamorceurs ont également pour inconvénient qu'ils sont à ce jour relativement rares et coûteux. Enfin, les rayonnements infra-rouge utilisés ont pour inconvénient de chauffer inutilement la composition polymérisable, et donc d'engendrer un rendement énergétique très faible.

Enfin, dans tous les exemples de réalisation, un film en Mylar est disposé sur chaque prepreg afin de faire office de barrière vis à-vis de l'oxygène de l'air, et donc éviter la formation d'une surface collante et non polymérisée . Cette étape de disposition d'un film en Mylar est un surcout dans la fabrication d'un matériau composite et ralentit la productivité.

Il existe ainsi un besoin pour un procédé de fabrication d'une pièce composite reproductible, consommant peu d'énergie et permettant son automatisation pour des fabrications en grande série.

Objet et résumé de l'invention

La présente invention a pour objet un procédé de fabrication d'une pièce composite, comprenant les étapes suivantes :

i) soumettre une première couche comprenant un premier renfort imprégné d'une première composition photopolymérisable et au moins une seconde couche comprenant un second renfort imprégné d'une seconde composition photopolymérisable à une première source de rayonnement lumineux dont au moins 80% en nombre des rayons émis ont des longueurs d'ondes comprises dans l'intervalle [$\lambda 1$ nm - 20 nm ; $\lambda 1$ nm + 20 nm];

ii) appliquer une seconde source de rayonnement lumineux à ladite première couche disposée dans un moule au moins 80% en nombre des rayons émis par la seconde source de rayonnement lumineux ayant des longueurs d'ondes comprises dans l'intervalle [$\lambda 2$ nm - 20 nm ; A2 nm + 20 nm], $\lambda 2 < \lambda 1$ ;

iii) disposer au moins une seconde couche sur la première couche, puis appliquer ladite seconde source de rayonnement lumineux à la seconde couche superposée à la première couche, ;

iv) démouler la pièce composite obtenue.

La première composition photopolymérisable peut être identique à la seconde composition photopolymérisable ou être différente de cette dernière par la résine, le groupe réactif, ou encore les photoamorceurs.

Le premier renfort peut être identique ou non au second renfort. Avantageusement, la première composition photopolymérisable comprend au moins une première résine ayant au moins un groupe réactif et au moins deux photoamorceurs (Al, B1), et la seconde composition photopolymérisable comprend au moins une seconde résine ayant au moins un groupe réactif et au moins deux photoamorceurs (A2, B2), les photo-amorceurs A1 et A2 absorbant la première source de rayonnement lumineux, et éventuellement la seconde source de rayonnement lumineux, et les photo-amorceurs B1 et B2 absorbant la seconde source de rayonnement lumineux, les photoamorceurs (A1, B1) et (A2, B2) générant des espèces réactives aptes à réagir avec le groupe réactif respectivement de la première résine et de la seconde résine pour amorcer la réaction de polymérisation de ladite résine.

Avantageusement, l'emploi de sources de rayonnement lumineux dont au moins 80% en nombre des rayons émis ont des longueurs d'ondes appartenant à un intervalle à +/- 20 nm permet de former des sources de rayonnement quasi- monochromatiques et donc de générer des faisceaux de rayonnement extrêmement concentrés et puissants qui vont être absorbés par les photo-amorceurs A1,A2, B1 et B2 dans toute l'épaisseur des première et seconde couches. En outre, le rendement énergétique est nettement amélioré puisque moins d'énergie est nécessaire pour consommer les photo-amorceurs (A1,A2, B1, B2) dans lesdites couches. Cette disposition permet également d'améliorer le contrôle de la polymérisation de la résine en fonction du temps d'application de ladite première source afin que cette dernière soit progressive, et non totale dès l'application de la première source de rayonnement lumineux.

Il est ainsi possible de réaliser des prepregs avec la première couche et ladite au moins une seconde couche qui peuvent être utilisés en continu dans la fabrication de la pièce composite, notamment de manière automatisée, dans les étapes (ii) à (iv), ou stockés en attendant d'être utilisées.

De préférence, les étapes (i) et/ou (ii) et/ou (iii) peuvent être effectuées sans apport d'une source de chaleur externe autre qu'éventuellement l'exothermie dégagée par la réaction de polymérisation de la première composition photopolymérisable et/ou de la seconde composition photopolymérisable.

De préférence, les étapes (i), (ii) et (iii), peuvent être effectuées sous l'oxygène de l'air ambiant, de préférence à la température ambiante, c'est-à-dire à une température comprise entre 5°C et 35°C, encore de préférence entre 15°C et 30°C.

Les inventeurs se sont aperçus que la surface collante de la première couche favorise l'adhérence avec la seconde couche et ainsi de suite. De plus, lorsque la seconde couche recouvre la première couche, la seconde couche fait office de barrière à l'oxygène de l'air pour la première couche ce qui contribue à obtenir une bonne polymérisation inter-couches et donc une très bonne adhérence inter-couches en limitant les risques de délaminage.

Plus particulièrement, aucun contre-moule n'est nécessaire de sorte que les étapes (i), (ii) et (iii) peuvent être effectuées à la pression atmosphérique.

Les lampes fournissant un rayonnement quasi-monochromatique sont utilisées à ce-jour dans la réparation des matériaux composites déjà fabriqués par exemple pour durcir une résine chargée de fibres de verre pulvérisée sur une pâle d'éolienne à réparer. Or, les renforts ainsi durcis présentent un tack important en surface du fait de la présence de l'oxygène de l'air inhibant la réaction de polymérisation. Cependant, ces renforts imprégnés étant utilisés, tel une rustine en réparation d'un matériau composite, les résines photopolymérisées poursuivent leur polymérisation à l'air libre sous l'effet de la lumière du soleil. Cet effet de tack est connu comme étant rédhibitoire notamment lorsque l'on souhaite faire adhérer plusieurs couches de compositions photopolymérisables entre-elles. Avantageusement, la combinaison de compositions photopolymérisables selon l'invention comprenant chacune au moins deux photoamorceurs activés de façon différenciée permet de contrôler le degré de polymérisation à l'étape (i) puis dans les étapes (ii) et (iii). En outre, l'intensité des sources lumineuses quasi-monochromatiques contribuent à cette différenciation maitrisée.

Il s'avère également que, de manière surprenante, la génération de tack du fait de la présence du dioxygène de l'air favorise l'adhérence inter-couches. De plus, le rendement énergétique élevé et le contrôle de la quantité de photoamorceurs absorbés grâce à l'emploi d'un rayonnement lumineux quasi monochromatique (du fait de la très faible largeur du spectre couvert par ladite source de rayonnement lumineux) permet de fabriquer des pièces en grande série, il n'y a ainsi que très peu de temps entre chaque étape, la vitesse et le degré de polymérisation dans chaque couche à chaque étape étant plus facilement maitrisables.

De plus, d'après la loi de Beer-Lambert, l'absorption lumineuse (ou densité optique : DO) est proportionnelle à l'épaisseur traversée par la lumière pour une longueur d'onde donnée. Si toute la lumière disponible est concentrée sur une plage de longueurs d'ondes restreinte, et donc quasi-monochromatique, la disponibilité des photons dans toute l'épaisseur des couches est plus forte, entrainant une polymérisation et une conversation plus importante.

De préférence, la vitesse de défilement du moule ou de la première source de rayonnement et/ou de la seconde source de rayonnement est supérieure ou égale à 0,1m/min, encore de préférence supérieure ou égale à 0,5 m/min, plus particulièrement comprise entre 0,5 m/min et 50 m/min, notamment entre 0,5 m/min et 25 m/min. De préférence, lors de l'étape (i), la vitesse de défilement du moule ou de la première source de rayonnement et/ou de la seconde source de rayonnement est supérieure ou égale à 0,1m/min, encore de préférence supérieure ou égale à 1 m/min, notamment supérieure ou égale à 3 m/min.

La vitesse de défilement du moule ou de la première source de rayonnement et/ou de la seconde source de rayonnement peut changer d'une application à l'autre lors d'une même étape (i) à (iii) ou encore lors de l'étape (v) ou (vi). Avantageusement, la dernière application de la seconde source de rayonnement à l'étape (iii) est effectuée à une vitesse de défilement inférieure à la vitesse de défilement de l'avant-dernière application de ladite seconde source de rayonnement à l'étape (iii).

De préférence, la première source de rayonnement lumineux, et éventuellement la seconde source de rayonnement lumineux, émet(tent) au moins 85% en nombre, en particulier au moins 90% en nombre, encore de préférence au moins 95% en nombre, de rayons ayant des longueurs d'ondes comprises dans l'intervalle λ1 (λ2) +/- 20 nm.

On comprend au sens de l'invention par source de rayonnement lumineux polychromatique, toute source de rayonnement lumineux émettant des rayons ayant des longueurs d'ondes s'étalant sur un intervalle de plus de 100 nm, de préférence de plus de 200 nm.

La première source de rayonnement lumineux peut être une lampe LED (« Light Emitting Diode »), laquelle a des spectres d'émission généralement à +/-20 nm. Il est également possible d'utiliser une lampe diode laser, laquelle permet d'obtenir des spectres encore plus restreints, par exemple au moins 80% en nombre des rayons lumineux émis sont dans un intervalle à +/- 5 nm autour d'une valeur déterminée, notamment à +/- 2 nm autour d'une valeur déterminée.

La seconde source de rayonnement lumineux est appliquée à l'ensemble des couches superposées, l'application étant orientée vers ladite au moins une seconde couche (ou dernière nième couche superposée).La proportion en nombre des rayons contenus dans un intervalle déterminé de longueurs d'ondes (nm) est indiquée par les fabricants des sources de rayonnement lumineux, et peut être mesurée directement à l'aide d'un spectrophotomètre correctement étalonné (par exemple fabriqué par Ocean Optics).

Les lampes LED ou Diode laser précitées ne sont pas utilisées pour la photopolymérisation d'un renfort imprégné d'une composition photopolymérisable. En effet, ces lampes ne comprennent pas à ce jour de longueurs d'ondes appartenant aux domaines de l'UV C ou de l'UV B. Or, les rayons appartenant aux UV B et UV C sont recherchés car ils permettent d'effectuer la photolyse des peroxydes générés lors de toute photopolymérisation par réaction avec l'oxygène de l'air, lesdits peroxydes étant générés suite à l'inhibition de la réaction de polymérisation en surface (réaction entre les radicaux amorceurs et le dioxygène de l'air) et générant ainsi une surface collante ou tackante en surface du renfort polymérisé.

Avantageusement, la matrice de la pièce composite résulte d'une seule chimie puisque les photoamorceurs A1, A2, B1 et B2 génèrent des espèces réactives aptes à réagir avec le groupe réactif de la première résine et de la seconde résine respectivement pour amorcer la réaction de polymérisation ce qui permet d'atteindre de meilleurs résultats mécaniques, en évitant notamment des déphasages de la matrice, et offre davantage de possibilités dans la maîtrise des propriétés finales de la pièce composite.

L'imprégnation des renforts peut être effectuée par foulardage, infusion, pulvérisation et de manière générale par toute technique d'application d'une composition liquide ou pâteuse sur un renfort.

On entend au sens de la présente invention par groupe réactif, tout atome ou groupement d'atomes qui est introduit dans la chaine principale de la résine, ou en bout de chaine de ladite résine, attribuant à ladite résine des propriétés de réactivité vis-à-vis des espèces réactives générées par l'absorption lumineuse au moins des photoamorceurs A1, A2, B1 et B2. Ledit groupe réactif peut être une double liaison carbone-carbone (C=C) ; ou encore un hétéroatome ou un groupe d'atomes comportant au moins un hétéroatome.

Le ou lesdits groupes réactifs peuvent être choisis indépendamment les uns des autres parmi : un ou plusieurs groupes epoxy(s), ledit groupe epoxy étant mono, di, tri ou tétravalent ; notamment un groupe glycidoxy ou un groupe alkyle substitué par un groupe glycidoxy ; un groupe alkyle ou cycloalkyle substitué par un groupe oxetane ; un groupe alkyle substitué par une amine primaire et/ou une amine secondaire et/ou une amine tertiaire ; une amine primaire ; une amine secondaire ; une amine tertiaire ; un groupe alkyle substitué par un groupe thiol ; un groupe thiol; un groupe urée ; un groupe alkyle substitué par un groupe urée ; un groupe isocyanate ; un groupe alkyle substitué par un groupe isocyanate ; un aldéhyde ($R_1COH$) ; un alcool primaire ; un groupe hydroxyle ; un groupe silane ($Si-OR_2$ ou $Si-H$) ; un acrylate ; un méthacrylate ; les vinyles ou leur combinaison. Les groupes $R_1$, $R_2$ précités peuvent être des groupes alkyles ou des hydrogènes. Lesdits groupes alkyles précités sont saturés, linéaires ou ramifiés, en C1-C20, encore de préférence en C1-C15, et encore de préférence en C1-C10 et les groupes cycloalkyles sont saturés, et de préférence, en C3-C6.

Des exemples non limitatif de résines comprenant ces groupes réactifs sont : les polyesters insaturés, les vinylesters, les amines non bloquées, les urée-formaldéhydes, les phénoliques, les méthacrylates, les acrylates, les epoxys, les uréthanes isocyanates, les polyéthers, les polysiloxanes. De préférence, lesdites résines comprennent un ou plusieurs monomères, éventuellement en mélange avec un ou plusieurs oligomères. De préférence, un oligomère présente un nombre d'unité de répétition supérieur ou égale à 2 mais inférieure à 100, de préférence inférieure à 50, encore de préférence inférieure à 25.

Le ou lesdits monomère(s) lorsque mélangé(s) avec un ou plusieurs oligomère(s) permettent d'ajuster la viscosité de la résine à mettre en oeuvre et/ou les propriétés mécaniques de la matrice.

Les espèces réactives résultant de l'absorption des rayons lumineux par les photoamorceurs sont des espèces radicalaires, ioniques, acides ou basiques.

La première et/ou seconde composition(s) photopolymérisable(s) peuvent également comprendre divers additifs, tels des stabilisants, des colorants, des pigments, des charges afin d'améliorer l'aspect et les propriétés finales de la pièce composite.

Néanmoins, les renforts imprégnés mis en oeuvre dans le cadre de la présente invention doivent pouvoir être translucides ou au moins semi-opaques aux rayons lumineux afin que les résines mises en oeuvre puissent polymériser, et ce dans toute l'épaisseur des couches.

La première composition photopolymérisable peut être identique à la seconde composition photopolymérisable ou être différente de cette dernière par la résine, le groupe réactif, ou encore les photoamorceurs.

Le premier renfort peut être identique ou non au second renfort.

Les première et seconde compositions photopolymérisables peuvent comprendre, en sus des photoamorceurs A1, A2, B1 et B2, un ou plusieurs autre(s) photoamorceur(s), absorbant également les rayons lumineux émis par la première source de rayonnement lumineux et / ou la seconde source de rayonnement lumineux afin d'ajuster les propriétés finales et l'adhérence inter-couches de la pièce composite.

Le ou les photoamorceur(s) A1 et/ou A2 peuvent absorber les rayons lumineux émis par la seconde source de rayonnement lumineux. De préférence, le ou les photoamorceurs B1 et/ou B2 n'absorbent pas les rayons lumineux émis par la première source de rayonnement lumineux λ1 +/- 20 nm, notamment son coefficient d'absorption molaire est très faible. De préférence, les photoamorceurs mis en oeuvre sont choisis, indépendamment, parmi les photoamorceurs radicalaires, cationiques, photobases ou photoacides, lesquels libèrent selon leur photolyse des espèces réactives radicalaires, ioniques, basiques ou acides.

La quantité de photoamorceur absorbé dépend notamment de la puissance de la source de rayonnement lumineux mais également du temps d'application de ladite source de rayonnement, qui est fonction de la vitesse de défilement de la ou des couches superposées à traiter ou de la source de rayonnement si lesdites couches sont statiques.

Avantageusement, le procédé selon l'invention permet de s'affranchir de l'utilisation d'un contre-moule puisqu'aucune mise sous vide ou surpression n'est nécessaire. Il est ainsi possible de fabriquer des formes complexes (en anneau et/ou en oméga par exemple), et ce à un coût moindre.

Lorsque la première ou la seconde résine ayant au moins un groupe réactif selon l'invention, est solide à une température inférieure à 25°C, en particulier à la température ambiante, à l'état pré-polymérisé (c'est-à-dire après avoir été soumise au moins à la première source de rayonnement lumineux selon l'invention), après l'étape i) et avant l'étape ii) ou lors de cette dernière, la première couche et éventuellement au moins la seconde couche sont chauffées afin d'être collantes et ainsi favoriser l'adhérence inter-couches.

Les quantités en poids en photoamorceur A1 et en photoamorceur A2 sont déterminées en fonction de la quantité en poids de la première résine et de la seconde résine, ainsi que du ou des groupe(s) réactif(s) supporté(s) par lesdites résine(s) en sorte qu'à l'issue de l'étape i), les première et seconde couches ne soient pas totalement polymérisées, les photomoamorceurs B1 et/ou B2 n'ayant pas encore été absorbé, afin de favoriser l'adhérence inter-couches.

Le procédé selon l'invention peut comprendre plusieurs couches comprenant un renfort imprégné d'une composition photopolymérisable selon l'invention disposées sur la seconde couche, ces dernières sont toutes exposées à la première source de rayonnement lumineux, et au moins une fois à la seconde source de rayonnement lumineux, éventuellement deux fois à la seconde source de rayonnement lumineux, tout comme la seconde couche.

Avantageusement, la première source de rayonnement lumineux étant quasi monochromatique, il est possible de choisir les photoamorceurs A1, A2, B1 et B2 indépendamment.

Ainsi, les photoamorceurs A1 et A2 dans les première et seconde couches absorbent les rayons lumineux $\lambda 1$ (nm) +/- 20 nm émis par la première source de rayonnement à l'étape i), et éventuellement les rayons lumineux émis par la seconde source de rayonnement à l'étape iii) si les photoamorceurs A1 et/ou A2 n'ont pas été totalement absorbés à la suite de l'étape i) et qu'ils sont photosensibles à la seconde source de rayonnement lumineux.

Avantageusement, les photoamorceurs B1 et B2 dans la première couche absorbent au moins partiellement les rayons émis par la seconde source de rayonnement lumineux à l'issue de l'étape ii), la consommation en photoamorceurs B1 et B2 est encore poursuivie à l'étape iii), de préférence pas totalement.

Si la pièce composite selon l'invention comprend au moins trois couches de renforts préimprégnés de la composition photopolymérisable selon l'invention, le photoamorceur B2 est consommé partiellement dans la seconde couche à l'issue de l'étape iii) en sorte que la seconde couche ne soit pas totalement polymérisée, et présente ainsi un aspect collant selon au moins sa seconde face favorisant l'adhérence avec la troisième couche (superposée à la seconde couche).

La première source de rayonnement lumineux, et éventuellement la seconde source de rayonnement lumineux, peut(peuvent) être une lampe LED (« Light Emitting Diode »), laquelle a des spectres d'émission généralement à +/-20 nm. Il est également possible d'utiliser une lampe diode laser, laquelle permet d'obtenir des spectres encore plus restreints, par exemple au moins 80% en nombre des rayons lumineux émis sont dans un intervalle à +/- 5 nm autour d'une valeur déterminée, notamment à +/- 2 nm autour d'une valeur déterminée.

Dans une sous-variante, un renfort secondaire non imprégné est disposé entre la première couche et la seconde couche ou entre une nième couche et une n+lième couche. Ce renfort secondaire peut être identique au premier ou second renfort selon l'invention ou encore comprendre un fil dans un métal conducteur, par exemple un fil de cuivre ou encore être une structure en nid d'abeilles ou encore un insert en alumimium.

La proportion en nombre des rayons contenus dans un intervalle déterminé de longueurs d'ondes (nm) est indiquée par les fabricants des sources de rayonnement lumineux, et peut être mesurée directement à l'aide d'un spectrophotomètre correctement étalonné (par exemple fabriqué par Ocean Optics).

La seconde source de rayonnement lumineux est appliquée à chaque inter-couches dans la pièce composite ce qui permet de parfaitement maitriser le degré et la cinétique de polymérisation de la matrice de la pièce composite.

En outre, la superposition des couches sur la première couche est effectuée très rapidement de sorte que la polymérisation étant incomplète entre deux couches adjacentes, on obtient une adhérence inter-couches. Dans une variante de réalisation, le photoamorceur B1 et/ou le photoamorceur B2 ont un pic d'absorption n'appartenant pas à l'intervalle [$\lambda 1$ (nm) - 20 (nm) ; $\lambda 1$ (nm) + 20 (nm)].

Dans une variante de réalisation, la longueur d'ondes $\lambda 1$ est comprise dans l'intervalle [350 nm ; 550 nm] et la longueur d'ondes $\lambda 2$ est comprise dans l'intervalle [200 nm ; 400 nm].

Dans une variante de réalisation, $\lambda 2 + 30$ nm $\leq \lambda 1$.

Dans une variante de réalisation, au moins 50%, de préférence au moins 80%, en poids du poids total du photoamorceur A1 et du photoamorceur A2 sont consommés à l'issu de l'étape i).

Les poids en photoamorceurs A1 et A2 sont déterminés par rapport aux poids de la première résine et de la seconde résine ayant des groupes réactifs en sorte que la consommation totale ou partielle des photoamorceurs A1 et A2 à l'issue de l'application de la première source de rayonnement lumineux produise des première et seconde couches qui ne sont pas totalement polymérisées, ce qui favorise ainsi l'adhérence inter-couches lorsque ces dernières sont superposées.

L'utilisation d'une source de rayonnement lumineux quasi monochromatique permet également de contrôler la quantité de photoamorceur absorbé.

Dans une variante de réalisation, au moins 50%, de préférence au moins 80%, en poids du poids total du photo-amorceur B1 et du photoamorceur B2 sont consommés à l'issu de l'étape ii).

Lors de cette étape, s'il reste des photoamorceurs A1 et A2 dans l'une des couches et que ce dernier est photosensible à la seconde source de rayonnement lumineux, il sera également consommé, éventuellement en totalité.

Si la totalité des photoamorceurs A1 et A2 est consommé à l'issue de l'étape ii) dans l'une des couches, les photoamorceurs B1 et B2 ne sont pas consommés en totalité afin de favoriser l'adhérence avec la seconde couche à l'étape iii).

Dans une variante de réalisation, au moins 90%, de préférence au moins 95%, en poids du poids total du photo-amorceur B1 est consommé à l'issu de l'étape ii) dans la première couche.

Cette disposition améliore l'adhérence inter-couches, et améliore la résistance au délaminage de la pièce composite.

Dans une variante de réalisation, la seconde composition photopolymérisable, et éventuellement la première composition photopolymérisable, comprend un troisième photo-amorceur C2, éventuellement C1, absorbant à la longueur d'onde λ3 et en ce que ledit procédé comprend une étape v) d'application d'une troisième source d'irradiation lumineuse polychromatique (nm) comprenant λ3 (nm), de préférence comprenant des longueurs d'ondes inférieures ou égales à 350 nm , à l'ensemble formé de la première couche et d'au moins une seconde couche superposées après l'étape iii) et avant l'étape iv).

Cette photopolymérisation a notamment pour fonction d'améliorer l'état de surface de la pièce composite afin qu'elle soit parfaitement sèche et polymérisée. Avantageusement, la dureté de surface de la pièce composite est améliorée en appliquant un rayonnement lumineux comprenant des rayons UV C et UV B.

La troisième source de rayonnement lumineux peut être émise avec une lampe mercure.

Dans une variante de réalisation, ledit procédé comprend une étape vi) d'application de ladite seconde source de rayonnement à ladite au moins une seconde couche superposée à la première couche, ayant lieu après l'étape iii), et éventuellement avant l'étape v).

Cette étape est effectuée sur la nième et dernière couche superposée à la première couche lors de l'étape (iii).

Ainsi, si cinq couches sont superposées à l'étape (iii), la cinquième couche superposée à l'ensemble des autres couches subiront l'étape (vi)Dans une variante de réalisation, la photopolymérisation induite suite à l'application de la première source de rayonnement lumineux et/ou la seconde source de rayonnement lumineux et/ou la troisième source de rayonnement lumineux est radicalaire ou cationique ou anionique ou peut être amorcée par un acide ou une base.

On entend par un acide ou une base, un acide ou une base de Brönsted, ou un acide ou une base de Lewis.

Dans une variante de réalisation, ladite au moins une première résine et/ou une seconde résine sont choisies indépendamment parmi : les résines polyesters insaturées, les résines epoxy, les résines vinyliques, les résines phénoliques, les résines siloxanes, les résines acrylates et les résines méthacrylates.

Dans une variante, la puissance de la première source de rayonnement lumineux et/ou de la seconde source de rayonnement lumineux est supérieure ou égale à 10 mW/cm$^2$, de préférence supérieure ou égale à 1 W/cm$^2$, encore de préférence supérieure ou égale à 2 W/cm$^2$.

La puissance ainsi délivrée est focalisée sur des spectres quasi monochromatiques ce qui permet d'améliorer les rendements énergétiques, et corrélativement d'améliorer la maîtrise de la cinétique et du degré de polymérisation et donc de la consommation en photomamorceurs.

De préférence, la puissance de la première source de rayonnement lumineux et/ou de la seconde source de rayonnement lumineux est inférieure ou égale à 500 W/cm$^2$, de préférence inférieure ou égale à 100 W/cm$^2$, et encore de préférence inférieure ou égale à 10 W/cm$^2$.

La puissance peut être mesurée à l'aide d'un radiomètre Powerpuck commercialisé par EIT.

Dans une variante, la puissance de la troisième source de rayonnement lumineux émet des rayons de longueur d'onde λ3 (nm) comprise dans l'intervalle [200 nm ; 800 nm], encore de préférence dans l'intervalle [250 nm ; 450 nm].

De préférence, la puissance de la troisième source de rayonnement est supérieure ou égale à 10 mW/cm$^2$, de préférence supérieure ou égale à 1 W/cm$^2$, encore de préférence supérieure ou égale à 2 W/cm$^2$.

Dans une variante, la première couche et la seconde couche sont stockées après l'étape i) entre deux films polymères pelables et opaques à la lumière visible.

Les première et seconde couches, et éventuellement d'autres couches selon l'invention entrant dans la structure de la pièce composite, peuvent ainsi être stockées pendant plusieurs jours, voire plusieurs mois.

Les films pelables sont choisis en sorte de ne pas interagir, et notamment de ne pas coller, avec les couches qu'ils recouvrent.

Dans une variante, le premier renfort et le second renfort comprennent des fibres ou des fils considéré(e)s individuellement ou en combinaison, notamment mis en oeuvre par tissage, tricotage, tressage, et/ou des nontissés, et/ou des particules, notamment choisis parmi la famille de matériaux suivants : para-aramide, méta-aramide, fibres à base de silice, fibres de verre, polyéthylène-téréphtalate, polyéthylène haute densité, poly(p-phénylène-2,6- benzobisoxazole (PBO), le carbone, le carbure de silicium, l'hydrate d'alumine, l'acier inoxydable, le gravier, le sable, les billes de verre, les billes d'aciers, la silice.

Dans une variante de réalisation, les photo-amorceurs A1, A2, B1 et B2 sont choisis, indépendamment, parmi : les alpha hydroxyacetophenones, les alkylaminocetophénones, dialkoxyacetophenones, les acetophenones, les cetals benzyliques, les oxydes d'acylphosphine, les alpha-aminocetones aromatiques substituées, les benzophenones, les thioxanthones, les aldéhydes, les phénones hydroxyalkylés, les éthers de benzoines, les oxime esters, les alpha-sulfonylcétone, les phénylglyoxalates, les métallocènes, les sels d'onium.

Description détaillée des dessins

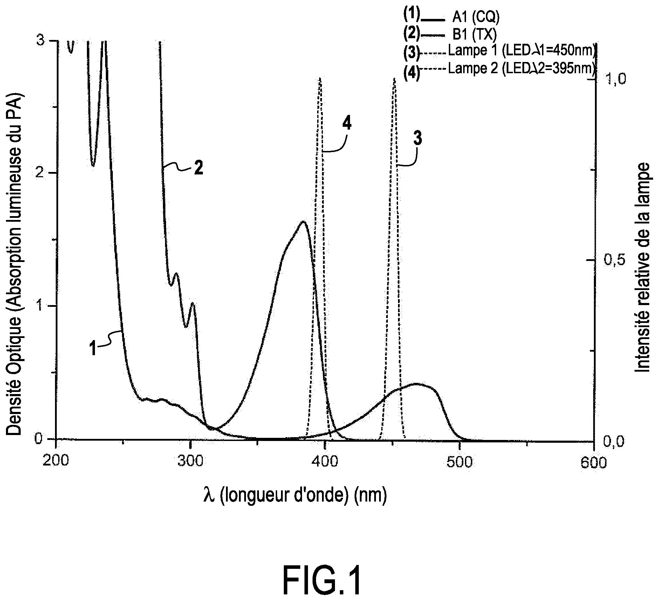

- la figure 1 est un graphique représentant les spectres des première et seconde sources de rayonnement lumineux quasi-monochromatiques utilisées à l'exemple 1 décrit ci-dessous ainsi que les absorptions lumineuses des photoamorceurs A1, B1 utilisées à l'exemple 1. Le graphique comporte en ordonnée à gauche la densité optique (absorption lumineuse du photoamorceur), en ordonnée à droite l'intensité relative de la lampe, et en abscisse les longueurs d'ondes (nm) ; et

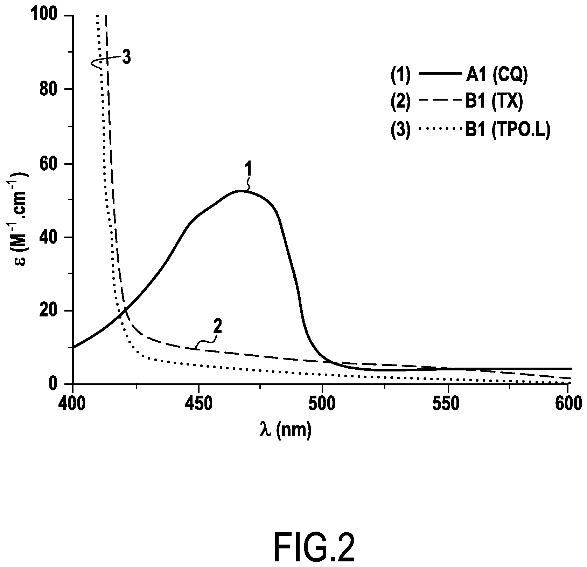

- la figure 2 est un graphique représentant les spectres d'absorption des photoamorceurs A1 (CQ) et B1 (TX) utilisés à l'exemple 1 ci-dessous et B1 (TPO-L) utilisé à l'exemple 4 ci-dessous et obtenu par mesure sur un spectromètre UV-visible, le coefficient d'extinction molaire ($\varepsilon$) est représenté en ordonnée et les longueurs d'ondes ($\lambda$) sont représentées en abscisse. Ces photoamorceurs ont été choisis de façon arbitraire parmi tous les autres photoamorceurs cités dans le présent texte pour illustrer le calcul des différences d'absorption lumineuse et le comportement des photoamorceurs dans le procédé selon l'invention.

Description détaillée de l'invention

L'invention sera mieux comprise à la lecture des exemples de réalisation décrits ci-après cités à titre non limitatif.

Exemple 1

La première composition photopolymérisable comprend une première résine polyester (par exemple Nuvopol 15-03 commercialisée par Mäder, notamment 60 parts), un monomère méthacrylate (par exemple MMA commercialisé par Arkema, notamment 40 parts), un photoamorceur A1 (par exemple Genomer CQ, 1 part, commercialisé par Rahn) et un autre photoamorceur A11 ayant un profil d'absorption de la lumière proche de A1 (par exemple Genocure EPD, 2 parts, commercialisés par Rahn), un photoamorceur B1 (par exemple Genocure ITX, 2 parts, commercialisé par Rahn). Trois des couches de renfort, en particulier un tissu en fibres de verre (par exemple UD 400 TF fabriqué par Chomarat) sont imprégnées de ladite première composition photopolymérisable, par exemple par foulardage, puis pré-réticulées par l'application d'une première source de rayonnement lumineux dont au moins 80% en nombre, de préférence au moins 95% en nombre, des rayons émis ont des longueurs d'ondes comprises dans l'intervalle [430 nm ; 470 nm] $\lambda 1$ (nm) vaut 450 nm, cette étape correspondant à l'étape i) du procédé selon l'invention. Dans cet exemple précis, les premier, second et troisième renforts sont imprégnés de la même première composition photopolymérisable.

Avantageusement, la première source de rayonnement lumineux comprend une lampe LED (par exemple fabriquée par Phoseon), de préférence avec une puissance de 8 W/cm$^2$.

La première couche de renfort imprégnée et pré-polymérisée est disposée dans un moule puis soumis à une seconde source de rayonnement lumineux dont au moins 80% en nombre, dans cet exemple précis au moins 95% en nombre, des rayons émis ont des longueurs d'ondes comprises dans l'intervalle [375 nm ; 415 nm], $\lambda 2$ (nm) vaut 395 nm, à une vitesse de défilement du moule ou de déplacement de la seconde source de l'ordre de 3 m/min par exemple ; cette étape correspondant à l'étape ii). La vitesse de défilement des renforts pré-imprégnés ou de la lampe est de l'ordre dans cet exemple de 10m/min. Le temps d'application pour la polymérisation lors de l'étape (i) est de 18 secondes (soit 6 secondes par couche).

La seconde source de rayonnement lumineux comprend en particulier une lampe LED (par exemple fabriquée par Phoseon), de préférence avec une puissance de 8 W/cm$^2$.

Dans cet exemple, la lampe LED a une largeur d'un mètre, la première couche ayant également une largeur d'un mètre, le temps nécessaire pour la polymérisation dans cette étape ii) est de l'ordre de 20 secondes.

La seconde couche, pré-polymérisée à l'étape i), est alors disposée sur la première couche. Ladite seconde source de rayonnement lumineux est appliquée à l'ensemble des première et seconde couches superposées à une vitesse de 3m/min dans le cadre de l'étape iii).

La troisième couche, également pré-polymérisée à l'étape i), est superposée à la seconde couche, puis l'ensemble des trois couches superposées est soumis à la seconde source de rayonnement lumineux, la vitesse de défilement du moule ou de la seconde source de rayonnement étant de 1m/min pour la finition de surface. L'étape (iii) est alors terminée. L'épaisseur final du produit est de 3 mm +/- 0,1 mm. La pièce composite finie est alors démoulée (iv).

Des essais mécaniques en traction ont été effectués selon la norme ISO 527-5 sur la pièce composite finie, on obtient ainsi un module de Young de 5060 MPa $\pm$ 320 MPa.

Les temps d'application des première et seconde sources de rayonnement lumineux dans les étapes (i), (ii) et (iii) pour fabriquer une pièce composite d'1m*1m comprenant trois couches est d'environ 118 secondes, soit 1 minute et 48 secondes.

Dans cet exemple selon l'invention trois plis ou renforts en verre sont utilisés tout comme dans l'exemple 10 d'US 6.207.726 B1. Dans cet exemple 10, la formation d'un prepreg dure 3 minutes, ce qui représente au total 9 minutes pour la fabrication de trois prepregs. L'ensemble formé de trois plis est ensuite soumis à un rayonnement pendant 10 minutes. Au total, 19 minutes sont nécessaires pour le pré-durcissement des prepregs et le durcissement total de la pièce composite faisant 10 cm$^2$ alors que seulement 1 minute et 48 secondes sont nécessaires dans le cadre de l'invention pour une pièce composite de 1 m$^2$.

Le graphique de la figure 1 représente les pics d'absorption des photoamorceurs A1 et B1. On remarque sur ce graphique que les spectres des lampes 1 et 2 d'absorption sont très étroits et quasi monochromatiques permettant ainsi d'utiliser des photoamorceurs ayant de pics d'absorption très proches mais parfaitement distincts.

Le choix des photoamorceurs A1 (CQ), B1 (TX) pour l'exemple 1 et BI(TPO-L) pour l'exemple 4 s'effectue notamment grâce à la mesure par un spectromètre UV-Visible du spectre d'absorption du photoamorceur, présenté sous la forme du coefficient d'extinction molaire ($\varepsilon$) en fonction de la longueur d'onde ($\lambda$).

Dans cet exemple 1 précis, le photoamorceur B1 ne doit pas absorber à 450nm, là où seul le photoamorceur A1 doit réagir. Il est impossible d'avoir une absorption complètement nulle pour un photoamorceur mais si deux photoamorceurs sont en présence, et si l'un absorbe majoritairement la lumière à une longueur d'onde donnée par rapport à l'autre photoamorceur, il est possible d'admettre que le photoamorceur B1 à un effet négligeable sur la polymérisation due au photoamorceur A1 lors de l'étape i).

D'après la loi de Beer-Lambert (éq. (1) ci-dessous), pour une épaisseur équivalente à polymériser de (1) et pour une concentration molaire égale à (C), il est possible d'établir l'équation (2) ci-dessous :

$$(1)\ DO = \varepsilon * 1 * C$$

$$(2)\ \text{Pour } \lambda=450nm,\ \text{dans l'acétonitrile} :\ DO\ (A1\ (CQ))\ /\ DO\ (B1(TX)) = \varepsilon(A1\ (CQ))/\ \varepsilon\ (B1\ (TX))$$

$$(3)\ DO = -\log(I/I_0)\ \text{d'où}\ I(A1(CQ))/I(B1\ (TX))=10^{\wedge}(\varepsilon\ (A1(CQ))/\ \varepsilon\ (B1(TX)))$$

Pour la lampe 1, à 450nm, les rapports d'intensité lumineuse absorbée (I) calculés sont :

$$I\ (A1(CQ)) = 10^{\wedge}9,2\ .\ I(B1\ (TPO\text{-}L))$$

$$I(A1(CQ))=10^{\wedge}4,6\ .\ I(B1(TX))$$

A1 (CQ) absorbe à 450nm (la lampe 1), ~40.000 fois plus de lumière que B1 (TX), et ~ 1 milliard 500 millions de fois plus de lumière que B1 (TPO-L). En comparatif, les absorptions lumineuses de B1 (TX) et B1 (TPO-L) sont bien négligeables pour la lampe 1 par rapport à l'absorption lumineuse de A1 (CQ).

Exemple 2

La première composition photopolymérisable comprend une première résine comprenant un oligomère d'acrylate (par exemple Genomer 4315 fabriquée par Rahn, notamment 60 parts), et des monomères acrylates (par exemple SR351 fabriqué par Sartomer, 30 parts, EBECRYL 114 fabriqué par CYTEC, 10 parts), un photoamorceur A1 (par exemple Genomer CQ, 1part) combiné avec un photomoarceur ayant un profil d'absorption proche du profil d'absorption du photoamorceur A1 (par exemple Genocure EPD, 2 parts, fabriqués par Rahn), un photoamorceur B1 (par exemple Irgacure 819, 1part, fabriqué par CIBA), un photoamorceur C1 (par exemple Genocure DMHA, 2 parts, fabriqués par Rahn).

Cinq couches de renfort, chacune comprenant un mat de fibres de verre, en particulier de l'ordre de 300 g/m² (par exemple fabriqué par Saint-Gobain) sont imprégnées de ladite première composition photopolymérisable, par exemple par foulardage, puis soumis à une première source de rayonnement lumineux dont au moins 80% en nombre, de préférence au moins 95% en nombre, des rayons émis ont des longueurs d'ondes comprises dans l'intervalle [430 nm ; 470 nm] $\lambda1$ (nm) vaut 450 nm ; cette étape correspondant à l'étape i).

En particulier, la première source de rayonnement lumineux comprend une lampe LED (par exemple fabriquée par Phoseon), de préférence avec une puissance de 8 W/cm². La vitesse de défilement des renforts pré-imprégnés ou de la lampe est de l'ordre dans cet exemple de 10m/min. Le temps d'application pour la polymérisation lors de l'étape (i) est de 30 secondes (soit 6 secondes par couche).

La première couche de renfort pré-imprégné et pré-polymérisé est disposée dans un moule puis soumis à une seconde source de rayonnement lumineux dont au moins 80% en nombre, de préférence au moins 95% en nombre, des rayons émis ont des longueurs d'ondes comprises dans l'intervalle [375 nm ; 415 nm] $\lambda2$ (nm) vaut 395 nm, à une vitesse de défilement du moule ou de déplacement de la seconde source de l'ordre de 3 m/min par exemple ; cette étape correspondant à l'étape ii).

La seconde source de rayonnement lumineux comprend en particulier une lampe LED (par exemple fabriquée par Phoseon), de préférence avec une puissance de 8 W/cm².

Dans cet exemple, la lampe LED a une largeur d'un mètre, la première couche ayant également une largeur d'un mètre, le temps nécessaire pour la polymérisation dans cette étape ii) est de l'ordre de 20 secondes.

La seconde couche de renfort pré-imprégné et pré-polymérisé est disposée sur la première couche puis soumise à ladite seconde source de rayonnement lumineux dans les mêmes conditions de vitesse et de puissance.

Une troisième couche de renfort pré-imprégné et pré-polymérisé est disposée sur la seconde couche puis soumise à ladite seconde source de rayonnement lumineux, de même pour la quatrième couche de renfort pré-imprégné et pré-polymérisé disposée sur la troisième couche, et soumise à ladite seconde source de rayonnement lumineux.

La cinquième et dernière couche de renfort pré-imprégné et pré-réticulé est superposée à l'ensemble formé des quatre couches, puis soumise à ladite seconde source de rayonnement dans les mêmes conditions de vitesse et de puissance.

Les temps d'application des première et seconde sources de rayonnement lumineux dans les étapes (i), (ii) et (iii) pour fabriquer une pièce composite d'1m*1m comprenant cinq couches est d'environ 130 secondes. L'ensemble formé des cinq couches est soumise à une troisième source de rayonnement lumineux à vitesse de l'ordre de 10m/min pour la finition de surface de la pièce composite. Cette étape correspondant à l'étape v) selon l'invention dure 6 secondes pour un ensemble formé de cinq couches ayant une largeur d'1 mètre. La durée totale des étapes (i) à (iii) et (v) est ainsi de 136 secondes pour une pièce composite de 1m*1m.

Ladite troisième rayonnement lumineux comprenant une lampe UV Mercure polychromatique (ED-Ray) d'une puissance lumineuse : UV-C (250nm-260nm)=0,2W/cm², UV-B(280nm-320nm)=0.75W/cm², UV-A(320nm-390nm)=0.95W/cm², UV-V(395nm-445nm)=0.8W/cm², la puissance totale étant de 2,7W/cm². Ces puissances ont été mesurées avec un radiomètre PowerPuck.

La pièce composite est ensuite démoulée puis testée en traction selon la norme ISO 527-4. On obtient un module de Young de 2090 MPa $\pm$ 260 MPa.

Exemple 3

La première composition photopolymérisable comprend une première résine comprenant un oligomère epoxy (par exemple Genomer 7210 commercialisée par Rahn, notamment 60 parts), un monomère (par exemple UVACURE 1500 commercialisé par Cytec, notamment 40 parts), un photoamorceur A1 (par exemple Irgacure 270 commercialisé par CIBA, 1 part) et un photoamorceur B1 (par exemple Irgacure 250 commercialisé par CIBA, 2parts).

Quatre couches de renfort, en particulier un mélange de fibre de verre et de carbone, notamment commercialisé par Chomarat, comprenant 127 g/m² de verre et 40 g/m² de carbone, sont imprégnées de ladite première composition photopolymérisable, par exemple par foulardage, puis pré-réticulées par l'application d'une première source de rayonnement lumineux dont au moins 80% en nombre, de préférence au moins 95% en nombre, des rayons émis ont des longueurs d'ondes comprises dans l'intervalle [345 nm ; 385 nm] $\lambda$1 (nm) vaut 365 nm, cette étape correspondant à l'étape i).

La vitesse d'application de la première source de rayonnement est de 3m/min. Le temps d'application pour la polymérisation lors de l'étape (i) est de 80 secondes (soit 20 secondes par couche).

Dans cet exemple précis, les premier, second, troisième et quatrième renforts sont imprégnés de la même première composition photopolymérisable.

Avantageusement, la première source de rayonnement lumineux comprend une lampe LED (par exemple fabriquée par Phoseon), de préférence avec une puissance de 2 W/cm$^2$.

La première couche de renfort imprégné et pré-polymérisé est disposée dans un moule puis soumis à une seconde source de rayonnement lumineux dont au moins 80% en nombre, dans cet exemple précis au moins 95% en nombre, des rayons émis ont des longueurs d'ondes comprises dans l'intervalle [295 nm ; 335 nm], $\lambda$2 (nm) vaut 315 nm, à une vitesse de défilement du moule ou de déplacement de la seconde source de l'ordre de 1 m/min par exemple ; cette étape correspondant à l'étape ii).

La seconde source de rayonnement lumineux comprend en particulier une lampe LED AlGaN (par exemple fabriquée par Roithner Laser Technic), de préférence avec une puissance de 2 W/cm$^2$.

La seconde couche, pré-polymérisée à l'étape i), est alors disposée sur la première couche. Ladite seconde source de rayonnement lumineux est appliquée à l'ensemble des première et seconde couches superposées pour la réalisation de l'étape de ii) à une vitesse de 1m/min.

La troisième couche, également pré-polymérisée à l'étape i), est superposée à la seconde couche, puis l'ensemble des trois couches superposées est soumis à ladite seconde source de rayonnement lumineux à une vitesse de 1m/min. Puis la quatrième couche, également pré-polymérisée à l'étape i), est superposée à la troisième couche, puis l'ensemble des quatre couches superposées est soumis à ladite seconde source de rayonnement lumineux la vitesse de défilement du moule ou de la seconde source de rayonnement étant diminuée alors à 0,5m/min pour la finition de surface. L'épaisseur finale du produit est de 4 mm +/- 0,1 mm. Les temps d'application des première et seconde sources de rayonnement lumineux dans les étapes (i), (ii) et (iii) pour fabriquer une pièce composite d'1m*1m comprenant quatre couches est d'environ 380 secondes, soit 6 minutes et 20 secondes. Il convient de noter ici que le temps de durcissement total est plus élevé car les quatre renforts comprennent chacun du carbone. La pièce composite finie est alors démoulée (iv).

Des essais mécaniques en traction ont été effectués selon la norme ISO 527-5 sur la pièce composite finie ; on obtient ainsi un module de Young de 8510 MPa $\pm$ 300 MPa.

Exemple 4

La première composition photopolymérisable comprend une première résine comprenant un oligomère vinyl-lester (par exemple Atlac E-Nova MA 6212 commercialisée par DSM, notamment 70 parts), un monomère acrylate (par exemple SR9020 commercialisé par Cytec, notamment 30 parts), un photoamorceur A1 (par exemple Irgacure 784 commercialisé par CIBA, 1 part) et un photoamorceur B1 (par exemple Lucirin TPO-L, 2 parts).

Ladite composition comprend également des microsphères de verre (commercialisés par 3M, 10 parts) et du trihydrate d'alumine (Apyral 60CD de Nabaltec, 10 parts).

Quatre couches de renfort, en particulier comprenant chacune un fil continu de verre E (Vetrotex Owens Corning), sont imprégnées de ladite première composition photopolymérisable, par exemple par pulvérisation, puis pré-réticulées par l'application d'une première source de rayonnement lumineux dont au moins 80% en nombre, de préférence au moins 95% en nombre, des rayons émis ont des longueurs d'ondes comprises dans l'intervalle [440 nm ; 450 nm] $\lambda$1 (nm) vaut 445 nm, cette étape correspondant à l'étape i).

La vitesse d'application de la première source de rayonnement est de 10 m/min. Dans cet exemple précis, les premier, second, troisième et quatrième renforts sont imprégnés de la même première composition photopolymérisable. Le temps d'application pour la polymérisation lors de l'étape (i) est de 24 secondes (soit 6 secondes par couche).

Avantageusement, la première source de rayonnement lumineux comprend une lampe diode laser (par exemple fabriquée Laser DPSS OEM), de préférence avec une puissance de 2,75 W/cm$^2$.

La première couche de renfort pré-imprégnée et pré-polymérisée est disposée dans un moule puis soumis à une seconde source de rayonnement lumineux dont au moins 80% en nombre, dans cet exemple précis au moins 95% en nombre, des rayons émis ont des longueurs d'ondes comprises dans l'intervalle [385 nm ; 425 nm], $\lambda$2 (nm) vaut 405 nm, à une vitesse de défilement du moule ou de déplacement de la seconde source de l'ordre de 3 m/min par exemple ; cette étape correspondant à l'étape ii).

La seconde source de rayonnement lumineux comprend en particulier une lampe LED (par exemple fabriquée par Phoseon), de préférence avec une puissance de 8 W/cm$^2$. La seconde couche, pré-polymérisée à l'étape i), est alors disposée sur la première couche. Ladite seconde source de rayonnement lumineux est appliquée à l'ensemble des première et seconde couches superposées pour la réalisation de l'étape ii) à une vitesse de 1m/min.

La troisième couche, également pré-polymérisée à l'étape i), est superposée à la seconde couche, puis l'ensemble des trois couches superposées est soumis à ladite seconde source de rayonnement lumineux à une vitesse de 1m/min. Puis la quatrième couche, également pré-polymérisée à l'étape i), est superposée à la troisième couche, puis l'ensemble des quatre couches superposées est soumis à ladite seconde source de rayonnement lumineux la vitesse de défilement du moule ou de la seconde source de rayonnement étant alors de 0,5m/min pour la finition de surface. L'épaisseur finale du produit est de 4 mm +/- 0,1 mm. Les temps d'application des première et seconde sources de rayonnement lumineux dans les étapes (i), (ii) et (iii) pour fabriquer une pièce composite d'1m*1m comprenant quatre couches est d'environ 104 secondes. La pièce composite finie est alors démoulée (iv).

Des essais mécaniques en traction ont été effectués selon la norme ISO 527-5 sur la pièce composite finie, on obtient ainsi un module de Young de 6250 MPa $\pm$ 200 MPa.

**Revendications**

1. Procédé de fabrication d'une pièce composite, **caractérisé en ce qu'**il comprend les étapes suivantes :

   i) soumettre une première couche comprenant un premier renfort imprégné d'une première composition photopolymérisable et au moins une seconde couche comprenant un second renfort imprégné d'une seconde composition photopolymérisable à une première source de rayonnement lumineux dont au moins 80% en nombre des rayons émis ont des longueurs d'ondes comprises dans l'intervalle [$\lambda1$ nm - 20 nm ; $\lambda1$ nm + 20 nm];
   ii) appliquer une seconde source de rayonnement lumineux à ladite première couche disposée dans un moule au moins 80% en nombre des rayons émis par la seconde source de rayonnement lumineux ayant des longueurs d'ondes comprises dans l'intervalle [$\lambda2$ nm - 20 nm ; $\lambda2$ nm + 20 nm], $\lambda2 < \lambda1$;
   iii) disposer ladite au moins une seconde couche sur ladite première couche, puis appliquer ladite seconde source de rayonnement lumineux à la seconde couche superposée à la première couche;
   iv) démouler la pièce composite obtenue ;

   et **en ce que** la première composition photopolymérisable comprend au moins une première résine ayant au moins un groupe réactif et au moins deux photoamorceurs A1, B1, et la seconde composition photopolymérisable comprend au moins une seconde résine ayant au moins un groupe réactif et au moins deux photoamorceurs A2,B2, les photo-amorceurs A1 et A2 absorbant la première source de rayonnement lumineux, et éventuellement la seconde source de rayonnement lumineux, et les photo-amorceurs B1 et B2 absorbant la seconde source de rayonnement lumineux, les photoamorceurs A1,B1 et A2,B2 générant des espèces réactives aptes à réagir avec le groupe réactif respectivement de
   la première résine et de la seconde résine pour amorcer la réaction de polymérisation de ladite résine ;
   la première composition photo-polymérisable est identique à la seconde composition polymérisable ou différente de cette dernière de par la résine, le groupe réactif, ou encore les photo-amorceurs A1, B1 ; A2, B2, le premier renfort étant identique au ou différent du second renfort.

2. Procédé de fabrication selon la revendication 1, **caractérisé en ce que** le photoamorceur B1 et/ou le photoamorceur B2 ont un pic d'absorption n'appartenant pas à l'intervalle [$\lambda1$ nm - 20 nm ; $\lambda1$ nm + 20 nm].

3. Procédé de fabrication selon l'une ou l'autre des revendications 1 et 2, **caractérisé en ce que** la longueur d'ondes $\lambda1$ est comprise dans l'intervalle [350 nm ; 550 nm] et la longueur d'ondes $\lambda2$ est comprise dans l'intervalle [200 nm ; 450 nm].

4. Procédé de fabrication selon l'une quelconque des revendications 1 à 3, **caractérisé en ce que** $\lambda2 + 30$ nm $\leq \lambda1$.

5. Procédé de fabrication selon l'une quelconque des revendications 1 à 4, **caractérisé en ce que** les étapes (ii), (iii), et optionnellement l'étape (i) et/ou l'étape (iv), sont effectuées de manière automatisée à l'aide d'un dispositif automatisé mécanique de sorte que chaque étape soit effectuée de manière séquentielle selon une durée prédéterminée.

6. Procédé de fabrication selon l'une quelconque des revendications 1 à 5, **caractérisé en ce qu'**au moins 50% en poids du poids total du photoamorceur A1 et du photoamorceur A2 sont consommés à l'issu de l'étape i).

**7.** Procédé de fabrication selon l'une quelconque des revendications 1 à 6, **caractérisé en ce qu'**au moins 80%, en poids du poids total du photoamorceur A1 et du photoamorceur A2 sont consommés à l'issu de l'étape i).

**8.** Procédé de fabrication selon l'une quelconque des revendications 1 à 7, **caractérisé en ce qu'**au moins 50% en poids du poids total du photo-amorceur B1 et du photoamorceur B2 sont consommés à l'issu de l'étape ii).

**9.** Procédé de fabrication selon la revendication 8, **caractérisé en ce qu'**au moins 80%, en poids du poids total du photo-amorceur B1 et du photoamorceur B2 sont consommés à l'issu de l'étape ii).

**10.** Procédé de fabrication selon l'une quelconque des revendications 1 à 9, **caractérisé en ce qu'**au moins 90% en poids du poids total du photo-amorceur B1 est consommé à l'issu de l'étape ii) dans la première couche.

**11.** Procédé de fabrication selon la revendication 10, **caractérisé en ce qu'**au moins 95% en poids du poids total du photo-amorceur B1 est consommé à l'issu de l'étape ii) dans la première couche.

**12.** Procédé de fabrication selon l'une quelconque des revendications 1 à 11, **caractérisé en ce que** la seconde composition photopolymérisable, et éventuellement la première composition photopolymérisable, comprend un troisième photo-amorceur C2, éventuellement C1, absorbant à la longueur d'onde λ3 et **en ce que** ledit procédé comprend une étape v) d'application d'une troisième source de rayonnement lumineux polychromatique nm comprenant λ3 nm à l'ensemble formé de la première couche et d'au moins une seconde couche superposées après l'étape iii) et avant l'étape iv).

**13.** Procédé de fabrication selon la revendication 12, **caractérisé en ce que** la troisième source de rayonnement lumineux polychromatique nm, comprenant λ3 nm, comprend des longueurs d'ondes inférieures ou égales à 350 nm.

**14.** Procédé de fabrication selon l'une quelconque des revendications 1 à 12, **caractérisé en ce qu'**il comprend une étape vi) d'application de ladite seconde source de rayonnement à la seconde couche superposée à la première couche, ayant lieu après l'étape iii), et éventuellement avant l'étape v).

**15.** Procédé de fabrication selon l'une quelconque des revendications 1 à 14, **caractérisé en ce que** la photopolymérisation induite suite à l'application de la première source de rayonnement et/ou la seconde source de rayonnement et/ou la troisième source de rayonnement est radicalaire ou cationique ou anionique ou peut être amorcée par un acide ou une base.

**16.** Procédé de fabrication selon l'une quelconque des revendications 1 à 15, **caractérisé en ce que** la puissance de la première source de rayonnement lumineux et/ou de la seconde source de rayonnement lumineux est supérieure ou égale à 10 mW/cm$^2$.

**17.** Procédé de fabrication selon la revendication 16, **caractérisé en ce que** la puissance de la première source de rayonnement lumineux et/ou de la seconde source de rayonnement lumineux est supérieure ou égale à 2 W/cm$^2$.

**18.** Procédé de fabrication selon l'une quelconque des revendications 1 à 17, **caractérisé en ce que** ladite au moins une première résine et/ou une seconde résine sont choisies indépendamment parmi : les résines polyesters insaturées, les résines epoxy, les résines vinyliques, les résines siloxanes, les résines phénoliques, les résines acrylates et les résines méthacrylates.

**19.** Procédé de fabrication selon l'une quelconque des revendications 1 à 18, **caractérisé en ce que** la première couche et la seconde couche sont stockées après l'étape i) entre deux films polymères pelables et opaques à la lumière visible.

**20.** Procédé de fabrication selon l'une quelconque des revendications 1 à 19, **caractérisé en ce que** le premier renfort et le second renfort comprennent des fibres ou des fils considéré(e)s individuellement ou en combinaison ; et/ou des nontissés ; et/ou des particules.

**21.** Procédé de fabrication selon l'une quelconque des revendications 1 à 20, **caractérisé en ce que** les photo-amorceurs A1, A2, B1 et B2 sont choisis, indépendamment, parmi : les alpha hydroxyacetophenones, les alkylaminoacetophénones, dialkoxyacetophenones, les acetophenones, les cetals benzyliques, les oxydes d'acylphosphine, les alpha-aminocetones aromatiques substituées, les benzophenones, les thioxanthones, les aldéhydes, les phénones hydroxyalkylés, les éthers de benzoines, les oxime esters, les alpha-sulfonylcétone, les phénylglyoxalates, les métallocènes, les sels d'onium.

**Patentansprüche**

1. Verfahren zur Herstellung eines Verbundteils, **dadurch gekennzeichnet, dass** es die folgenden Schritte umfasst:

    i) eine erste Schicht, welche eine mit einer ersten photopolymerisierbaren Zusammensetzung imprägnierte erste Verstärkung umfasst, und wenigstens eine zweite Schicht, welche eine mit einer zweiten photopolymerisierbaren Zusammensetzung imprägnierte zweite Verstärkung umfasst, einer ersten Lichtstrahlungsquelle aussetzen, von der wenigstens 80 %, bezogen auf die Anzahl, der ausgesandten Strahlen Wellenlängen im Bereich [$\lambda$1 nm - 20 nm; $\lambda$1 nm + 20 nm] aufweisen,
    ii) eine zweite Lichtstrahlungsquelle auf die in einer Form angeordnete erste Schicht anwenden, wobei wenigstens 80 %, bezogen auf die Anzahl, der durch die zweite Lichtstrahlungsquelle ausgesandten Strahlen Wellenlängen im Bereich [$\lambda$2 nm - 20 nm; $\lambda$2 nm + 20 nm], $\lambda$2 < $\lambda$1, aufweisen,
    iii) die wenigstens eine zweite Schicht auf der ersten Schicht anordnen, dann die zweite Lichtstrahlungsquelle auf die auf der ersten Schicht angeordnete zweite Schicht anwenden,
    iv) das erhaltene Verbundteil ausformen,

    und dass die erste photopolymerisierbare Zusammensetzung wenigstens ein erstes Harz umfasst, das wenigstens eine reaktive Gruppe und wenigstens zwei Photoinitiatoren A1, B1 aufweist, und die zweite photopolymerisierbare Zusammensetzung wenigstens ein zweites Harz umfasst, das wenigstens eine reaktive Gruppe und wenigstens zwei Photoinitiatoren A2, B2 aufweist, wobei die Photoinitiatoren A1 und A2 die erste Lichtstrahlungsquelle absorbieren, und eventuell die zweite Lichtstrahlungsquelle, und wobei die Photoinitatoren B1 und B2 die zweite Lichtstrahlungsquelle absorbieren, wobei die Photoinitiatoren A1, B1 und A2, B2 reaktive Spezies erzeugen, die geeignet sind, mit der reaktiven Gruppe des ersten Harzes bzw. des zweiten Harzes zu reagieren, um die Polymerisationsreaktion des Harzes zu initiieren,
    die erste photopolymerisierbare Zusammensetzung mit der zweiten polymerisierbaren Zusammensetzung identisch ist oder aufgrund des Harzes, der reaktiven Gruppe oder aber der Photoinitiatoren A1, B1; A2, B2 von letzterer verschieden ist, wobei die erste Verstärkung mit der zweiten Verstärkung identisch oder von dieser verschieden ist.

2. Herstellungsverfahren nach Anspruch 1, **dadurch gekennzeichnet, dass** der Photoinitiator B1 und/oder der Photoinitiator B2 einen Absorptionspeak haben, der nicht zu dem Bereich [$\lambda$1 nm - 20 nm; $\lambda$1 nm + 20 nm] gehört.

3. Herstellungsverfahren nach dem einen oder dem anderen der Ansprüche 1 und 2, **dadurch gekennzeichnet, dass** die Wellenlänge $\lambda$1 im Bereich [350 nm; 550 nm] liegt und die Wellenlänge $\lambda$2 im Bereich [200 nm; 450 nm] liegt.

4. Herstellungsverfahren nach einem der Ansprüche 1 bis 3, **dadurch gekennzeichnet, dass** $\lambda$2 + 30 nm $\leq$ $\lambda$1.

5. Herstellungsverfahren nach einem der Ansprüche 1 bis 4, **dadurch gekennzeichnet, dass** die Schritte (ii), (iii) und optional Schritt (i) und/oder Schritt (iv) mit Hilfe einer automatisierten mechanischen Vorrichtung automatisiert durchgeführt werden, so dass jeder Schritt entsprechend einer vorbestimmten Dauer sequentiell durchgeführt wird.

6. Herstellungsverfahren nach einem der Ansprüche 1 bis 5, **dadurch gekennzeichnet, dass** wenigstens 50 Gew.-% des Gesamtgewichtes des Photoinitiators A1 und des Photoinitiators A2 am Ende des Schrittes i) aufgebraucht sind.

7. Herstellungsverfahren nach einem der Ansprüche 1 bis 6, **dadurch gekennzeichnet, dass** wenigstens 80 Gew.-% des Gesamtgewichtes des Photoinitiators A1 und des Photoinitiators A2 am Ende des Schrittes i) aufgebraucht sind.

8. Herstellungsverfahren nach einem der Ansprüche 1 bis 7, **dadurch gekennzeichnet, dass** wenigstens 50 Gew.-% des Gesamtgewichtes des Photoinitiators B1 und des Photoinitiators B2 am Ende des Schrittes ii) aufgebraucht sind.

9. Herstellungsverfahren nach Anspruch 8, **dadurch gekennzeichnet, dass** wenigstens 80 Gew.-% des Gesamtgewichtes des Photoinitiators B1 und des Photoinitiators B2 am Ende des Schrittes ii) aufgebraucht sind.

**10.** Herstellungsverfahren nach einem der Ansprüche 1 bis 9, **dadurch gekennzeichnet, dass** wenigstens 90 Gew.-% des Gesamtgewichtes des Photoinitiators B1 am Ende des Schrittes ii) in der ersten Schicht aufgebraucht ist.

**11.** Herstellungsverfahren nach Anspruch 10, **dadurch gekennzeichnet, dass** wenigstens 95 Gew.-% des Gesamtgewichtes des Photoinitiators B1 am Ende des Schrittes ii) in der ersten Schicht aufgebraucht ist.

**12.** Herstellungsverfahren nach einem der Ansprüche 1 bis 11, **dadurch gekennzeichnet, dass** die zweite photopolymerisierbare Zusammensetzung, und eventuell die erste photopolymerisierbare Zusammensetzung, einen dritten Photoinitiator C2, eventuell C1, umfasst, der bei der Wellenlänge λ3 absorbiert, und dass das Verfahren einen Schritt v) des Anwendens einer dritten polychromatischen Lichtstrahlungsquelle nm mit λ3 nm auf die Anordnung, gebildet von der ersten Schicht und von wenigstens einer zweiten Schicht, welche übereinander angeordnet sind, nach Schritt iii) und vor Schritt iv) umfasst.

**13.** Herstellungsverfahren nach Anspruch 12, **dadurch gekennzeichnet, dass** die dritte polychromatische Lichtstrahlungsquelle nm mit λ3 nm Wellenlängen von weniger als oder gleich 350 nm umfasst.

**14.** Herstellungsverfahren nach einem der Ansprüche 1 bis 12, **dadurch gekennzeichnet, dass** es einen Schritt vi) des Anwendens der zweiten Strahlungsquelle auf die auf der ersten Schicht angeordnete zweite Schicht umfasst, der nach Schritt iii) und eventuell vor Schritt v) stattfindet.

**15.** Herstellungsverfahren nach einem der Ansprüche 1 bis 14, **dadurch gekennzeichnet, dass** die im Anschluss an die Anwendung der ersten Strahlungsquelle und/oder zweiten Strahlungsquelle und/oder dritten Strahlungsquelle herbeigeführte Photopolymerisation radikalisch oder kationisch oder anionisch ist oder durch eine Säure oder eine Base initiiert werden kann.

**16.** Herstellungsverfahren nach einem der Ansprüche 1 bis 15, **dadurch gekennzeichnet, dass** die Leistung der ersten Lichtstrahlungsquelle und/oder der zweiten Lichtstrahlungsquelle größer als oder gleich 10 mW/cm$^2$ ist.

**17.** Herstellungsverfahren nach Anspruch 16, **dadurch gekennzeichnet, dass** die Leistung der ersten Lichtstrahlungsquelle und/oder der zweiten Lichtstrahlungsquelle größer als oder gleich 2 W/cm$^2$ ist.

**18.** Herstellungsverfahren nach einem der Ansprüche 1 bis 17, **dadurch gekennzeichnet, dass** das wenigstens eine erste Harz und/oder eine zweite Harz unabhängig ausgewählt sind aus: ungesättigten Polyesterharzen, Epoxidharzen, Vinylharzen, Siloxanharzen, Phenolharzen, Acrylatharzen und Methacrylatharzen.

**19.** Herstellungsverfahren nach einem der Ansprüche 1 bis 18, **dadurch gekennzeichnet, dass** die erste Schicht und die zweite Schicht nach Schritt i) zwischen zwei abziehbaren und für sichtbares Licht undurchlässigen Polymerfilmen gelagert werden.

**20.** Herstellungsverfahren nach einem der Ansprüche 1 bis 19, **dadurch gekennzeichnet, dass** die erste Verstärkung und die zweite Verstärkung Fasern oder Fäden, die einzeln oder in Kombination betrachtet werden; und/oder Vliese; und/oder Partikel umfassen.

**21.** Herstellungsverfahren nach einem der Ansprüche 1 bis 20, **dadurch gekennzeichnet, dass** die Photoinitiatoren A1, A2, B1 und B2 unabhängig ausgewählt sind aus: alpha-Hydroxyacetophenonen, Alkylaminoacetophenonen, Dialkoxyacetophenonen, Acetophenonen, Benzylketanen, Acylphosphinoxiden, substituierten aromatischen alpha-Aminoketonen, Benzophenonen, Thioxanthonen, Aldehyden, Hydroxyalkylphenonen, Benzoinethern, Oximestern, alpha-Sulfonylketonen, Phenylglyoxalaten, Metallocenen, Oniumsalzen.

**Claims**

**1.** Process for manufacturing a composite part, **characterized in that** it comprises the following steps:

i) subjecting a first layer comprising a first reinforcement impregnated with a first photopolymerizable composition and at least one second layer comprising a second reinforcement impregnated with a second photopolymerizable composition to a first source of light radiation having at least 80 % by number of emitted rays with wavelengths in the range of [λ1 nm - 20 nm; λ1 nm + 20 nm];

ii) applying a second source of light radiation to said first layer arranged in a mould, at least 80 % by number of the rays emitted by the second source of light radiation having wavelengths in the range of [$\lambda 2$ nm - 20 nm; $\lambda 2$ nm + 20 nm], $\lambda 2 < \lambda 1$;

iii) arranging said at least one second layer on said first layer, then applying said second source of light radiation to the second layer superimposed over the first layer;

iv) releasing the composite part obtained from the mould;

and **in that** first photopolymerizable composition comprises at least one first resin having at least one reactive group and at least two photo-initiators A1, B1, and the second photopolymerizable composition comprises at least one second resin having at least one reactive group and at least two photo-initiators A2, B2, the photo-initiators A1 and A2 absorbing the first light radiation source, and optionally the second light radiation source, and the photo-initiators B1 and B2 absorbing the second light radiation source, the photo-initiators A1,B1 and A2,B2 generating reactive species capable of reacting with the reactive group of the first resin and second resin respectively, to initiate the polymerization reaction of said resin;

the first photopolymerizable composition is the same as the second polymerizable composition or differs therefrom through the resin, the reactive group or the photo-initiators A1,B1; A2,B2, the first reinforcement being the same as or differing from the second reinforcement.

2. The manufacturing process according to claim 1, **characterized in that** the photo-initiator B1 and/or the photo-initiator B2 have an absorption peak that does not belong to the range [$\lambda 1$ nm - 20 nm; $\lambda 1$ nm + 20 nm].

3. The manufacturing process according to either of claims 1 and 2, **characterized in that** wavelength $\lambda 1$ lies within the range [350 nm; 550 nm] and wavelength $\lambda 2$ lies within the range [200 nm; 450 nm].

4. The manufacturing process according to any of claims 1 to 3, **characterized in that** $\lambda 2$ + 30 nm $\leq \lambda 1$ nm.

5. The manufacturing process according to any of claims 1 to 4, **characterized in that** steps (ii), (iii) and optionally step (i) and/or step (iv) are automated using an automated mechanical device so that each step is performed sequentially for a predetermined time.

6. The manufacturing process according to any of claims 1 to 5, **characterized in that** at least 50 % by weight of the total weight of photo-initiator A1 and of photo-initiator A2 are consumed after step (i).

7. The manufacturing process according to any of claims 1 to 6, **characterized in that** at least 80 % by weight of the total weight of photo-initiator A1 and of photo-initiator A2 are consumed after step (i).

8. The manufacturing process according to any of claims 1 to 7, **characterized in that** at least 50 % by weight of the total weight of photo-initiator B1 and of photo-initiator B2 are consumed after step (ii).

9. The manufacturing process according to claim 8, **characterized in that** at least 80 % by weight of the total weight of photo-initiator B1 and of photo-initiator B2 are consumed after step (ii).

10. The manufacturing process according to any of claims 1 to 9, **characterized in that** at least 90 % by weight of the total weight of photo-initiator B1 is consumed after step (ii) in the first layer.

11. The manufacturing process according to claim 10, **characterized in that** at least 95 % by weight of the total weight of photo-initiator B1 is consumed after step (ii) in the first layer.

12. The manufacturing process according to any of claims 1 to 11, **characterized in that** the second photopolymerizable composition, and optionally the first photopolymerizable composition, comprises a third photo-initiator C2, optionally C1, absorbent at wavelength $\lambda 3$, and **in that** said process comprises a step v) to apply a third source of polychromatic light radiation nm comprising $\lambda 3$ nm to the assembly formed of the superimposed first layer and at least second layer after step iii) and before step iv).

13. The manufacturing process according to claim 12, **characterized in that** the third source of polychromatic light radiation nm comprising $\lambda 3$ nm, comprises wavelengths of 350 nm or lower.

14. The manufacturing process according to any of claims 1 to 12, **characterized in that** it comprises a step vi) to apply said second radiation source to the second layer superimposed over the first layer, which takes place after step iii) and optionally before step v).

15. The manufacturing process according to any of claims 1 to 14, **characterized in that** the photopolymerization induced further to application of the first radiation source and/or second radiation source and/or third radiation source is radical or cationic or anionic and can be initiated with an acid or a base.

16. The manufacturing process according to any of claims 1 to 15, **characterized in that** the power of the first light radiation source and/or second light radiation source is 10 mW/cm$^2$ or higher.

17. The manufacturing process according to claim 16, **characterized in that** the power of the first light radiation source and/or of the second light radiation source is 2 W/cm$^2$ or higher.

18. The manufacturing process according to any of claims 1 to 17, **characterized in that** said at least one first resin and/or second resin are independently selected from among: unsaturated polyester resins, epoxy resins, vinyl resins, siloxane resins, phenolic resins, acrylate resins and methacrylate resins.

19. The manufacturing process according to any of claims 1 to 18, **characterized in that** the first layer and the second layer are stored after step i) between two peel-off polymer films opaque to visible light.

20. The manufacturing process according to any of claims 1 to 19, **characterized in that** the first reinforcement and the second reinforcement comprise fibres or wires considered individually or in combination; and/or nonwovens; and/or particles.

21. The manufacturing process according to any of claims 1 to 20, **characterized in that** the photo-initiators A1, A2, B1 and B2 are independently selected from among: alpha hydroxyacetophenones, alkylaminoacetophenones, dialkoxyacetophenones, acetophenones, benzyl ketals, acylphosphine oxides, substituted aromatic alpha-aminoketones; benzophenones, thioxanthones, aldehydes, hydroxyalkyl phenones, benzoin ethers, oxime esters, alpha-sulfonyl ketones, phenylglyoxalates, metallocenes, onium salts.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100272574 A1

- US 6207726 B1